# FASCICULE DE BREVET EUROPEEN

(11) **EP 1 636 018 B1**
(45) Date de publication et mention de la délivrance du brevet: **25.11.2009**
(21) Numéro de dépôt: 04767299.3
(22) Date de dépôt: 09.06.2004
(51) Int. Cl.: B29D 11/00

(54) **PROCEDE ET DISPOSITIF DE MOULAGE D'UNE LENTILLE OPTIQUE, EN PARTICULIER UNE LENTILLE OPHTALMIQUE**
VERFAHREN UND VORRICHTUNG ZUM FORMEN EINER OPTISCHEN LINSE, INSBESONDERE EINER OPHTHALMISCHEN LINSE
METHOD AND DEVICE FOR MOULDING AN OPTICAL LENS, ESPECIALLY AN OPHTHALMIC LENS

(30) Priorité: 11.06.2003 FR 0306987
(43) Date de publication de la demande: 22.03.2006
(73) Titulaire: ESSILOR INTERNATIONAL (Compagnie Générale d'Optique), F-94220 Charenton-le-Pont (FR)
(72) Inventeur: FRESON, David, F-80200 Estrees-Deniecourt (FR); CAILLOUX, Jean-François, F-77600 Bussy-Saint-Georges (FR)
(74) Mandataire: Lepelletier-Beaufond, François
(86) Numéro de dépôt international: PCT/FR2004/001433
(87) Numéro de publication internationale: WO 2004/110731

(56) Documents cités:
- FR-A- 1 204 627
- GB-A- 847 797
- US-A- 2 304 664

## Description

L'invention a trait au domaine de la fabrication des lentilles optiques, en particulier des lentilles ophtalmiques destinées à former des verres de lunettes.

L'invention concerne plus particulièrement un procédé de moulage à plat et un dispositif pour l'obtention d'une telle lentille optique à partir d'une matière polymérisable, ces procédés et dispositifs comportant l'emploi de coquilles de moulage.

On sait que les coquilles de moulage sont couramment employées dans ce domaine pour former les deux surfaces internes d'un moule correspondant aux deux faces de la lentille finie qui est obtenue après polymérisation de la matière dans le moule.

On connaît du document US 4 474 355 un dispositif et un procédé de moulage d'une lentille ophtalmique, dans lesquels sont employés deux coquilles ainsi qu'un support pour les deux coquilles qui permet de les disposer à plat à distance l'une de l'autre pour former un moule.

Ce support comporte, pour mettre en position les coquilles, une série d'épaulements pour chaque coquille, chaque épaulement étant ménagé dans un montant faisant saillie à partir d'un socle annulaire.

Le document FR 2 449 519 décrit également un dispositif employant deux coquilles de moulage. Un joint annulaire est propre à recevoir les deux coquilles et à assurer l'étanchéité entre elles.

Le joint annulaire forme ainsi avec les coquilles une cavité de moulage étanche, l'élasticité du joint permettant à celui-ci de se déformer pour accompagner le retrait de la matière lors de la polymérisation.

Par ailleurs, le document DE 2 455 888 décrit un dispositif comportant deux jeux de coquilles, chaque jeu comportant une pluralité de coquilles côte à côte reliées entre elles, ces deux jeux de coquilles étant adaptés à être superposés de sorte que les coquilles coopèrent deux à deux, chacune en vis-à-vis d'une autre pour former une cavité de moulage.

Un procédé de moulage d'une lentille optique est décrite dans GB 847 797 qui divulgue le préambule de la revendication 1.

On connaît encore, par le brevet français 1,204,627, qui divulgue le préambule de la revendication 3, un dispositif dans lequel le moule est réalisé grâce à un support spécial adapté à maintenir deux coquilles de moulage en verre trempé l'une en face de l'autre, avec une molette prévue pour régler l'écartement des coquilles en verre en fonction de l'épaisseur requise pour la lentille une fois moulée. Dans ce moule, le réceptacle dans lequel vient se positionner la coquille supérieure, est exclusivement formée par la surface utile de moulage de la coquille inférieure.

L'invention vise un procédé et un dispositif permettant la fabrication de telles lentilles à un niveau de qualité élevé dans un environnement de production industrielle à forte cadence, ce procédé et ce dispositif étant néanmoins totalement flexibles de par l'emploi d'un jeu de coquilles amovibles.

A cet effet, et selon un premier aspect, l'invention vise un procédé selon la revendication 1.

Le procédé selon l'invention est ainsi du genre employant un jeu de coquilles comportant des coquilles de différentes géométries, l'utilisateur sélectionnant alors une première coquille et une deuxième coquille qui correspondent aux deux faces de la lentille destinée à être obtenue au terme du moulage, mais, contrairement à l'art antérieur précité, le positionnement relatif des deux coquilles n'est pas effectué par un support ou par un joint commun aux deux coquilles. L'emploi, pour chaque coquille, d'un porte-coquille distinct offre en particulier l'avantage qu'aucune pièce de jonction ni aucun joint entre les coquilles ne soit nécessaire.

Cela permet en particulier de réduire les contraintes d'épaisseur minimale au bord et par conséquent au centre de la lentille.

Selon un mode de réalisation préféré, l'immobilisation est rigidement réalisée lors de l'étape d'immobiliser la première coquille ainsi que lors de l'étape d'immobiliser la deuxième coquille, et le procédé comporte en outre, après l'étape d'amener ledit premier porte-coquille et ledit deuxième porte-coquille à prendre une position relative prédéterminée, l'étape d'immobiliser le premier porte-coquille et le deuxième porte-coquille l'un par rapport à l'autre à l'exception d'un mouvement mutuel de rapprochement.

Ce mouvement mutuel de rapprochement, qui est le seul autorisé entre les deux coquilles, est destiné à accompagner le retrait de la matière lors de sa polymérisation. En effet, dans cet agencement, les coquilles sont immobilisées rigidement par rapport aux porte-coquilles, c'est à dire matière rigide contre matière rigide, sans moyens élastiques intermédiaires. Une grande précision de positionnement des coquilles est ainsi obtenue, et donc une grande précision de moulage. Néanmoins, le fait de ne pas utiliser de moyens élastiques intermédiaires a pour conséquence de ne pouvoir recourir à une quelconque propriété de déformation d'un matériau pour s'assurer que le moule reste bien au contact de la matière. Le recours à cette caractéristique de rapprochement des coquilles intervient donc dans ce cadre.

L'invention vise également, selon un deuxième aspect, un dispositif selon la revendication 3.

Selon un mode de réalisation préféré du dispositif, pour les raisons exposées ci-dessus, le premier porte-coquille est adapté à immobiliser rigidement la première coquille et le deuxième porte-coquille est adapté à immobiliser rigidement la deuxième coquille, et ladite structure est en outre adaptée à immobiliser le premier porte-coquille et le deuxième porte-coquille l'un par rapport à l'autre, à l'exception d'un mouvement mutuel de rapprochement.

Selon des caractéristiques préférées du dispositif, l'encombrement latéral de la surface utile de moulage de la deuxième coquille est inférieur à la largeur de la cuvette de sorte à former, dans ladite position prédéterminée de moulage, une nourrice de matière dans l'espace ouvert entre la deuxième coquille et les bords de ladite cuvette.

Cette nourrice de matière forme un apport permanent de matière, tant que celle-ci n'est pas polymérisée.

Selon d'autres caractéristiques préférées, le dispositif comporte un joint annulaire adapté à coopérer avec la première coquille de sorte que, lorsque celle-ci est dans sa position prédéterminée par rapport au premier porte-coquille, une extrémité dudit joint est comprimée contre le contour de la surface utile de moulage pour assurer l'étanchéité entre le joint et la première coquille, ledit joint délimitant les bords de la cuvette.

La première coquille comporte une portion de bord sensiblement cylindrique qui, lorsque les coquilles sont dans leur position prédéterminée par rapport au porte-coquille respectif, saille aventageusement sensiblement verticalement du contour de la surface utile de moulage en direction du deuxième porte-coquilles, cette portion de bord délimitant les bords de la cuvette.

Selon une autre caractéristique préférée, l'un des porte-coquilles au moins est relié à ladite structure par des moyens de guidage à coulissement.

Selon une autre caractéristique préférée, le deuxième porte-coquille comporte des moyens de serrage de la deuxième coquille définissant ladite position prédéterminée de réception de la deuxième coquille, ces moyens de serrage présentant, lorsqu'ils sont associés à la deuxième coquille, un encombrement latéral inférieur à la largeur de la cuvette de sorte que la deuxième coquille et les moyens de serrage peuvent être disposés à l'intérieur de la cuvette.

Selon d'autres caractéristiques préférées, ladite structure comporte une première platine reliée au premier porte-coquille ainsi qu'une deuxième platine reliée au deuxième porte-coquille, lesdites platines étant adaptées à être superposées de sorte que, dans cette position superposée, le premier porte-coquille soit en vis-à-vis du deuxième porte-coquille.

L'utilisation de ces platines reliées chacune à un porte-coquille permet de combiner les déplacements relatifs d'une platine par rapport à l'autre avec les déplacements de chaque porte-coquille relativement à sa platine respective. Une grande liberté de positionnement des coquilles l'une par rapport à l'autre est ainsi obtenue.

Par ailleurs, le premier porte coquille peut être mobile à coulissement par rapport à la première platine, de sorte à pouvoir régler la position relative des deux coquilles. De plus, le dispositif peut comporter en outre des moyens d'entraînement du premier porte-coquille par rapport à la première platine, ces moyens étant de plus adaptés à maintenir le premier porte-coquille dans une position prédéterminée par rapport à la première platine.

Le dispositif peut également comporter au moins un vérin de compensation adapté à exercer sur l'ensemble formé par le premier porte-coquille et la première coquille une force opposée et juste inférieure au poids dudit ensemble.

Par ailleurs, le deuxième porte-coquille peut être mobile en rotation par rapport à la deuxième platine. De plus, le dispositif peut comporter un index angulaire adapté à indiquer la position angulaire de la deuxième coquille par rapport à la deuxième platine.

Ladite structure peut comporter des moyens d'inclinaison permettant au premier porte-coquille d'admettre, en plus de la position de travail, une position inclinée dans laquelle la première coquille est orientée obliquement par rapport à sa position à plat.

Ces moyens d'inclinaison permettent de déposer de façon avantageuse la matière polymérisable dans la cuvette.

Selon une caractéristique préférée, le premier porte-coquille comporte un siège annulaire rigide adapté à recevoir la première coquille et définissant ladite position prédéterminée de la première coquille par rapport au premier porte-coquille. De plus, le dispositif peut comporter au moins un vérin de verrouillage adapté à solliciter la première coquille contre ledit siège annulaire.

Le siège annulaire et le vérin de verrouillage garantissent une mise en position optimale de la première coquille par rapport au premier porte-coquille.

L'exposé de l'invention sera maintenant poursuivi par la description d'un exemple préféré de réalisation, donnée ci-après à titre illustratif et non limitatif, en référence aux dessins annexés. Sur ceux-ci :
- la figure 1 est une vue en élévation-coupe partielle prise dans une machine comportant les porte-coquilles du dispositif selon l'invention et une structure pour entraîner suivant divers mouvements prédéterminés ces porte-coquilles, laquelle machine est montrée dans une position de repos où elle est prête à recevoir la première coquille ;
- la figure 2 est une vue similaire à la figure 1, mais où la partie de la machine montrée est celle que l'on voit à droite (et non à gauche) de l'axe d'articulation suivant un axe transversal des porte-coquilles, la première coquille étant montrée en place dans le premier porte-coquille, celui-ci ayant pivoté d'un demi-tour autour de l'axe transversal susmentionné par rapport à sa position illustrée sur la figure 1 ;
- la figure 3 est une vue similaire à la figure 2, mais où la cuvette formée par la première coquille et par le joint annulaire a été remplie en matière polymérisable ;
- la figure 4 est une vue similaire à la figure 1, prise en même temps que la figure 3, mais pour la partie de la machine que l'on voit à gauche de l'axe transversal d'articulation, la deuxième coquille étant alors en place dans le deuxième porte-coquille ;
- la figure 5 est une vue similaire à la figure 3, dans une position de la machine où le deuxième porte-coquille a basculé d'un demi-tour par rapport à sa position illustrée sur la figure 4 et où le positionnement relatif du premier porte-coquille et du deuxième porte-coquille a été ajusté pour que les surfaces en regard respectivement de la première coquille et de la deuxième coquille aient le positionnement relatif souhaité ;
- la figure 6 est une vue similaire à la figure 1, montrant à nouveau la machine en position de repos et montrant l'ensemble formé par la première coquille, par la deuxième coquille et par la matière pré-polymérisée en cours d'évacuation de cette machine ;
- la figure 7 est une vue similaire à la figure 2, pour une variante de réalisation de la machine et pour une variante de mise en oeuvre de l'opération de remplissage de la cuvette formée par la première coquille et par le joint annulaire ;
- la figure 8 est une autre vue en coupe de cette variante de la machine, prise suivant un plan de coupe disposé transversalement par rapport au plan de coupe suivant lequel est pris la figure 7.

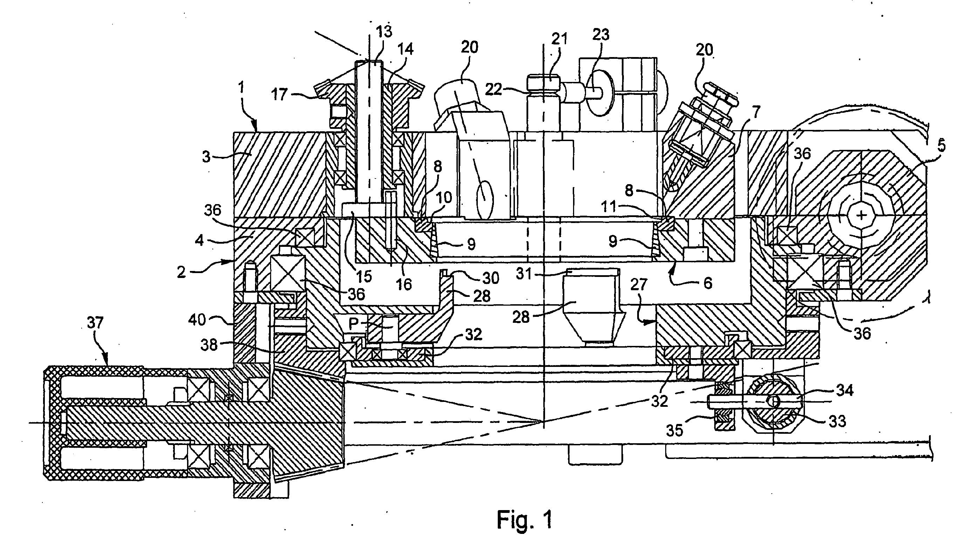

Les figures 1 à 6 montrent un dispositif de moulage selon l'invention, comportant une première platine 1 et une deuxième platine 2 articulées l'une par rapport à l'autre.

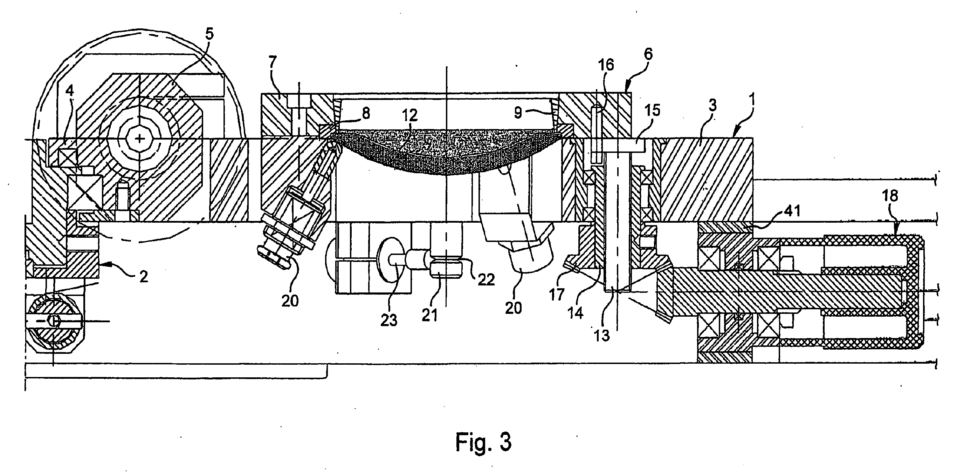

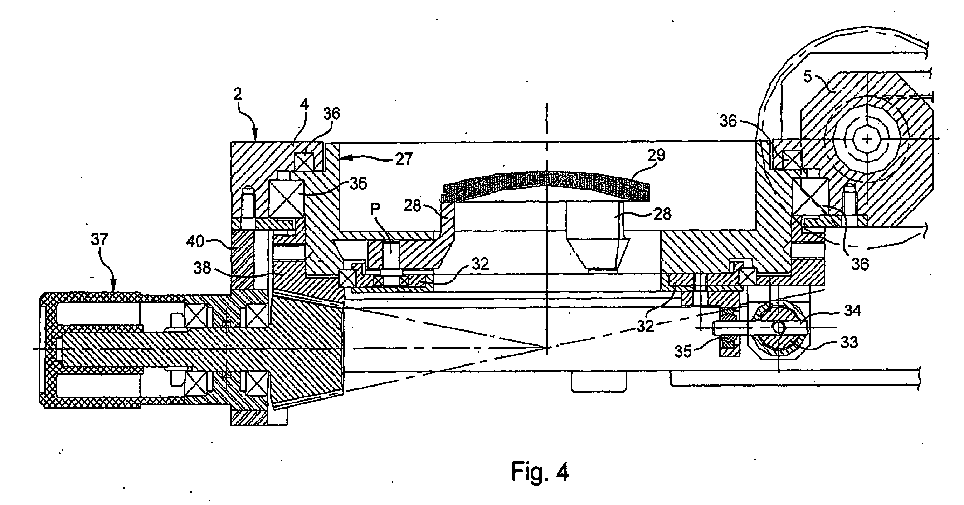

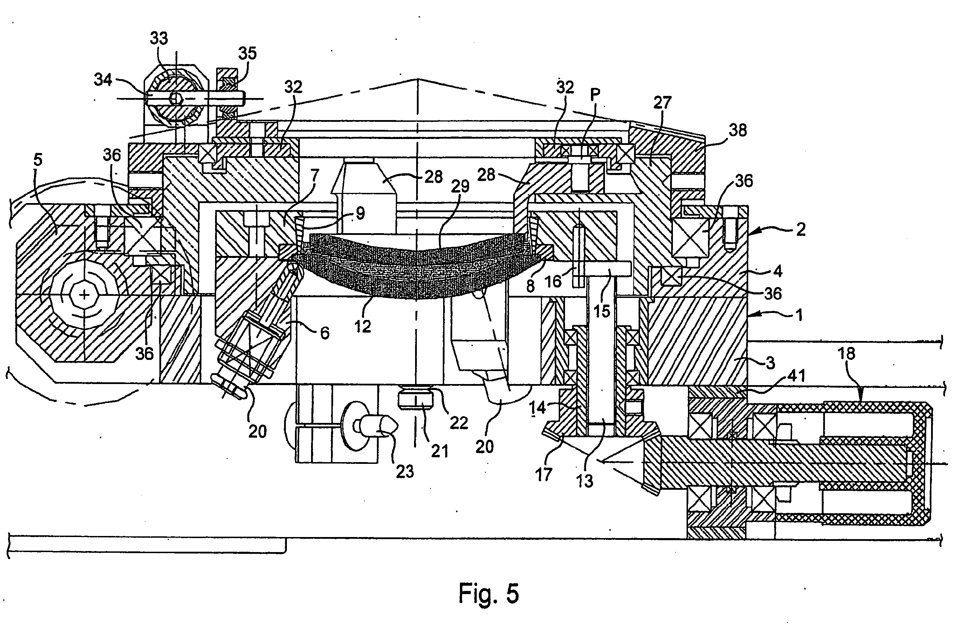

Chaque platine 1 et 2 comporte un corps, respectivement référencé par 3 et 4, dans lequel est pratiqué un évidement central. Les deux platines 1, 2 sont articulées au moyen d'une charnière 5 pour permettre à l'ensemble formé par les deux platines 1, 2 de se replier sur lui-même dans une première position (voir la figure 1 sur laquelle la première platine 1 est au-dessus de la deuxième platine 2), de s'ouvrir à la manière d'un livre (voir figures 3 et 4 qui représentent respectivement la première platine 1 disposée à droite de la charnière 5 et la deuxième platine disposée à gauche de la charnière 5) ou encore de se replier sur lui-même dans une deuxième position (voir la figure 5 sur laquelle la deuxième platine 2 est au-dessus de la première platine 1).

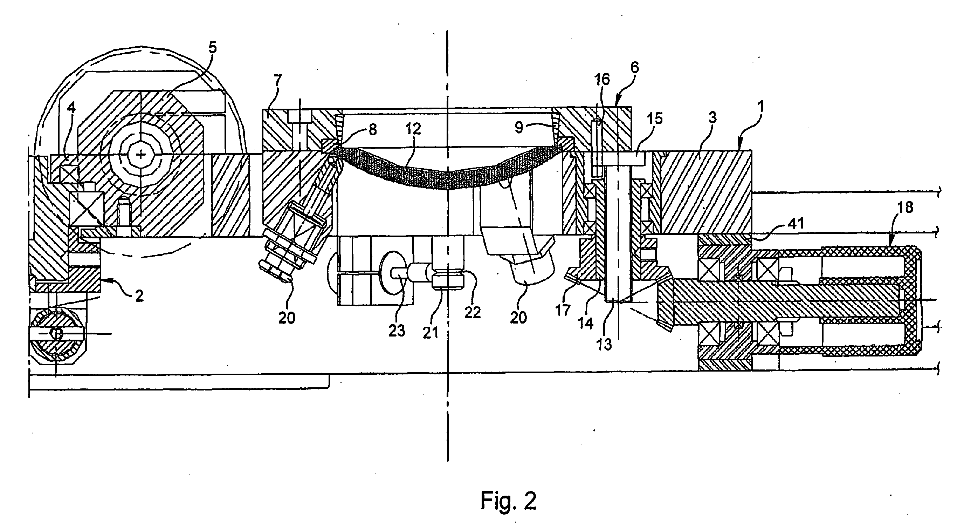

Au niveau de la première platine 1, visible à la figure 2, le dispositif comporte en outre un premier porte-coquille 6. Ce dernier comporte un corps 7 présentant un évidement central qui est positionné en vis-à-vis de l'évidement central de la première platine 1.

Le premier porte-coquille 6 comporte de plus un siège annulaire 8 emmanché en force dans le corps 3 et entourant ledit évidement central, ainsi qu'un joint annulaire 9 rattaché au corps 7 de sorte à se positionner, en l'absence de sollicitation, contre une surface interne du siège 8.

On notera que le siège 8 comporte un usinage circulaire définissant deux surfaces 10, 11 (voir figure 1) de calage d'une première coquille 12, le joint annulaire 9 affleurant au niveau d'une desdites surfaces de calage 10, celle qui est horizontale lorsque la première platine 1 est dans la positon de la figure 1 (dans la suite de la présente description, les termes "horizontal" et "vertical" se réfèrent aux orientations telles qu'on les voit sur les figures 1 à 6).

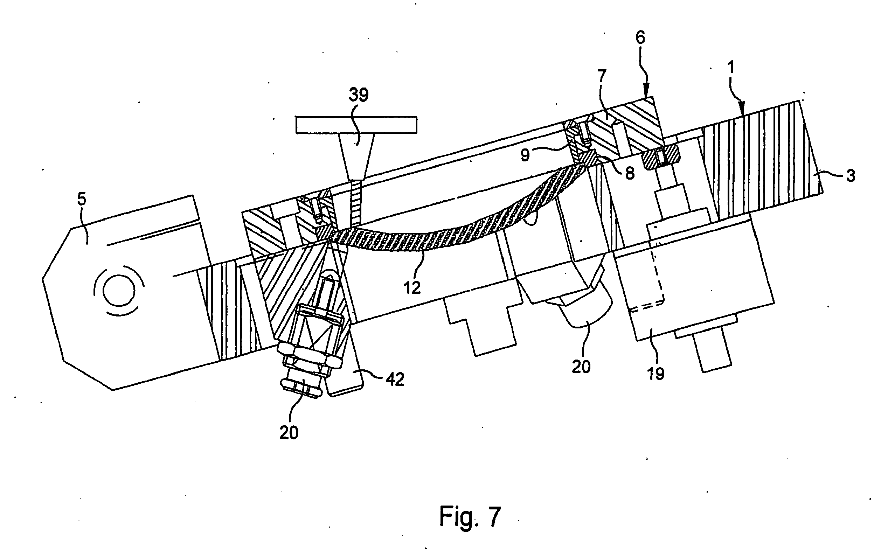

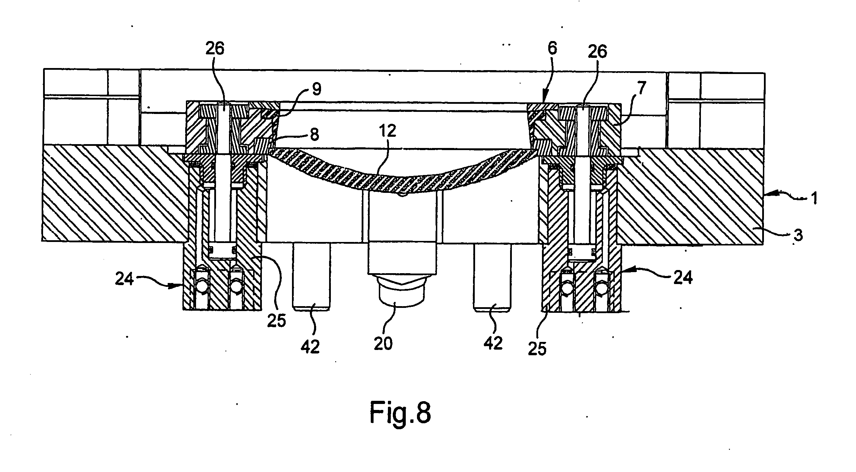

Le premier porte-coquille 6 est disposé dans l'évidemment central de la première platine 1 et est monté sur un jeu de glissières 42 (voir figures 7 et 8) permettant au premier porte-coquille 6 un mouvement de translation vertical par rapport à la première platine 1.

Ce mouvement de translation est commandé par un système de vis 13 et d'écrou 14. La vis 13 comporte une tête 15 s'appuyant sur une surface du premier porte-coquille 6 pour être à même de soulever ce dernier, la tête 15 étant immobilisée en rotation par un ergot 16.

On notera que l'ergot 16 n'arrête que la rotation et n'empêche pas le porte-coquille 6 de s'éloigner de la tête 15 et par conséquent de la première platine 1 suivant la verticale.

L'écrou 14 est monté sur roulements par rapport à la première platine 1 de sorte à pouvoir tourner librement pour faire monter ou descendre la vis 13.

Cet écrou 14 est de plus entraîné en rotation par un engrenage 17 à axes concourants permettant de commander la rotation de l'écrou 14 par une molette 18 actionnée manuellement.

Une grande précision quant au positionnement vertical du premier porte-coquille 6 par rapport à la première platine 1 est ainsi obtenue.

En variante, la translation du premier porte-coquille 6 peut être commandée par un moteur ou un vérin asservi 19 (voir figure 7).

Le premier porte-coquille 6 peut ainsi prendre une position dans laquelle il est en appui contre la première platine 1 (figure 2) et une pluralité de positions dans lesquelles le premier porte-coquille est à l'écart de la première platine 1 d'une distance contrôlée par la molette 18 ou le vérin 19 (figure 5).

Comme exposé plus haut, le siège annulaire 8 est destiné à recevoir et mettre en position la première coquille 12. Le premier porte-coquille 6 comporte à cet effet trois vérins 20 de serrage (seuls deux de ces vérins sont visibles sur les figures en coupe) disposés régulièrement à 120° autour du siège 8 et disposés obliquement de sorte que leurs tiges soient aptes à solliciter la première coquille 12 contre le siège 8 (figure 2, 3, 4 et 5) après déformation du joint 9.

Lorsque la première platine 1 est dans la position de la figure 2, le premier porte-coquille 6 repose par gravité sur la tête 15 de la vis 13.

A l'inverse, lorsque la première platine 1 est dans la position de la figure 1 (c'est-à-dire retournée par rapport à la position de la figure 2), la gravité tend à éloigner le premier porte-coquille 6 de la première platine 1. Pour éviter cela, et garantir que le premier porte-coquille 6 et la première platine 1 demeurent plaqués l'un contre l'autre même pendant des manoeuvres de basculement de la première platine 1 autour de l'axe de la charnière 5, le dispositif de moulage comporte des moyens d'arrêt constitués ici d'une tige 21 (glissière) saillant du premier porte-coquille 6 et comportant à son extrémité une rainure 22, ainsi qu'un vérin 23 comportant un embout conique propre à bloquer la tige 21 au niveau de sa rainure 22 (figure 1).

Cette position de blocage des moyens d'arrêt correspond à une position stable dans laquelle le premier porte-coquille 6 est plaqué contre la première platine 1.

Dans une variante représentée à la figure 8, ces moyens d'arrêt sont constitués par deux vérins 24 double effet dont le corps 25 de chacun est solidaire de la première platine 1 et dont la tige 26 de chacun est solidaire du premier porte-coquille 6. Ces vérins peuvent être mis en pression de manière classique pour assurer la fonction de placage du premier porte-coquille 6 contre la première platine 1, en l'occurrence par mise en communication de la chambre à petite section de ces vérins avec la source de pression tandis que la chambre à grande section est mise en communication avec un retour qui est à la pression athmosphérique.

Ces vérins peuvent également être mis en pression dans la chambre à grande section de sorte à jouer un rôle de vérin de compensation exposé plus loin.

En ce qui concerne la deuxième platine 2 (visible plus particulièrement à la figure 4), celle-ci comporte également un corps 4 dans lequel est pratiqué un évidement central occupé par un deuxième porte-coquille 27, le deuxième porte-coquille 27 comportant lui-même un évidement central en regard de l'évidement central du corps 4, de sorte que le deuxième porte-coquille 27 soit ouvert de part en part, le long de son épaisseur.

Le deuxième porte-coquille 27 comporte un jeu de trois mors 28 à serrage concentrique destiné au serrage et à la mise en position d'une deuxième coquille 29, la mise en position étant réalisée, de même que pour le premier porte-coquille 6, par un usinage des mors 28 définissant pour chacun d'eux deux surfaces orthogonales 30, 31 (voir figure 1). On notera que lorsque les platines 1 et 2 sont en vis-à-vis (à droite ou à gauche de la charnière 5), les surfaces 10 et 30 sont parallèles et les surfaces 11 et 31 sont concentriques.

Le serrage concentrique de ces mors 28 est ici réalisé de manière connue par une couronne de came 32 adaptée à déplacer radialement, lors de sa rotation autour de l'évidement central, trois pions P solidaires chacun d'un des mors 28.

La rotation de la couronne de came 32 est commandée par un vérin 33 apte à déplacer, perpendiculairement au plan du dessin, une tige 34 rattachée à la couronne de came 32 par une rotule 35.

Le deuxième porte-coquille 27 est monté sur des roulements 36 de sorte à pouvoir tourner par rapport au corps 4, autour de l'axe vertical par rapport auquel les mors 28 sont concentriques.

Cette rotation du deuxième porte-coquille 27 par rapport à la deuxième platine 2 peut être commandée par une molette 37 rattachée au corps 4 et qui engrène sur une roue conique 38 solidaire du deuxième porte-coquille 27.

La position angulaire de la deuxième coquille 29 autour de l'axe vertical passant par son centre (le centre de concentricité des mors 28) peut ainsi être réglée avec précision avec la molette 37 (qui peut être remplacée par un moteur asservi pour automatiser cette tâche).

Globalement, le dispositif de moulage est maintenu au sein d'une machine de production par l'axe de la charnière 5. Des butées 40, 41 définissent les positions horizontales de repos de la première platine 1 lorsqu'elle est à droite de la charnière 5 et de la deuxième platine 2 lorsqu'elle est à gauche de la charnière 5.

Le pivotement des platines 1, 2 autour de la charnière 5 maintenue fixe est motorisé, par exemple par des roues respectives tournant autour de l'axe de la charnière 5, les platines 1, 2 étant chacune liée en rotation à l'une desdites roues.

De plus, des moyens de commande sont prévus pour piloter les différents organes du dispositif de moulage qui peuvent être actionnés automatiquement.

Par exemple, un automate programmable ou un microprocesseur exécutant un programme approprié permet d'actionner dans un ordre précis le pivotement des deux platines 1, 2, le mouvement des mors concentriques 28, la translation du premier porte-coquille 6 par rapport à la première platine 1 (dans le cas où un vérin 19 est prévu, figure 7), la commande des vérins de calage 20 et éventuellement des vérins double effet 24.

Ces moyens de commande sont également adaptés au contrôle d'éventuels dispositifs supplémentaires de préhension, de dépôt de matière polymérisable ou de polymérisation, comme exposé plus loin.

Le dispositif de moulage que l'on vient de décrire fonctionne de la manière indiquée ci-après.

La position initiale du dispositif est celle de la figure 1, les deux platines 1, 2 étant superposées à droite de la charnière 5.

Les moyens d'arrêt 21, 22, 23 (ou les vérins double effet blocage/compensation 24) étant dans leur position où il retiennent le premier porte-coquille 6 contre la première platine 1, la première coquille 12 est alors chargée sur la première platine 1 par le dessus. Cette première coquille 12 est amenée par tout moyen de préhension, par exemple une ventouse, avec sa concavité tournée vers le bas, c'est-à-dire vers la deuxième platine 2, pour être calée dans le siège annulaire 8, les vérins de calage 20 étant rétractés.

La première coquille 12 repose ainsi par gravité sur la surface de calage 10 et est positionnée latéralement par la surface de calage 11.

Les vérins de serrage 20 sont ensuite déployés et maintenus en pression pour que leurs tiges bloquent les bords de la première coquille 12 contre le siège annulaire 8 déformant ainsi le joint d'étanchéité 9.

La première coquille 12 ayant été mise en position, la première platine 1 est pivotée pour se placer à droite de la charnière 5 (voir figure 2).

On notera que dans cette position, le joint annulaire 9 est comprimé contre la première coquille 12, de manière que la jonction entre le joint 9 et la première coquille 12 soit étanche et que la face concave de la première coquille 12, qui doit ici servir au moulage, coopère avec le siège 8 et le joint 9 pour former une cuvette dont le fond regarde vers le haut (figure 2).

Une quantité prédéterminée de matière polymérisable, en fonction du volume à mouler, est ensuite déposée dans la cuvette ainsi formée, ce dépôt pouvant être effectué manuellement ou par un dispositif de dépôt approprié tel qu'une vanne de dosage.

La figure 3 représente la première platine 1 après le dépôt de matière.

Du fait que respectivement la partie droite et la partie gauche du dispositif montrées sur les figures 3 et 4 correspondant à une même position, l'opération montrée sur la figure 4 peut être effectuée simultanément au dépôt de matière qui vient d'être exposé. Cette opération en temps masqué permet un gain de productivité. La deuxième coquille 29 est en effet amenée par le dessus, éventuellement par le même moyen de préhension que la première coquille 12, et est mise en position et serrée par les mors 28, sa face servant au moulage, ici sa face convexe, étant tournée vers le haut (figure 4).

Une fois la deuxième coquille 29 serrée, il peut être nécessaire de régler sa position angulaire autour d'un axe vertical, dans le cas où la deuxième coquille 29 est destinée au moulage d'un verre corrigeant l'astigmatisme. Ce réglage est effectué par une action sur la molette 37.

La deuxième platine 2 est ensuite pivotée pour venir se superposer à la première platine 1 sur la droite de la charnière 5.

La deuxième coquille 29 est alors en vis-à-vis et à distance de la cuvette formée par la première coquille 12.

Les moyens d'arrêt 21, 22, 23 (ou les vérins 24) étant inhibés, le premier porte-coquille 6 est soulevé de la première platine par l'action de la molette 18 ou du vérin asservi 19, de sorte que la première coquille 12 vienne mettre en contact la matière polymérisable avec la deuxième coquille 29, telle que représenté sur la figure 5.

On notera qu'une nourrice de matière est formée par le surplus de matière à la périphérie de la surface utile concave de la première coquille 12.

La première et la deuxième coquille 12, 29 étant dans une position prédéterminée par rapport au dispositif, la remontée du premier porte-coquille 6 peut être contrôlée pour que l'écartement des deux coquilles 12, 29 corresponde précisément aux dimensions recherchées pour le moule.

Une phase de polymérisation de la matière est ensuite mise en oeuvre. Pour cela, des moyens de projection, par exemple de rayons ultraviolets, sont amenés au-dessus et au-dessous de l'ensemble formé par les deux coquilles 12, 29 et la matière.

Les coquilles 12, 29 sont à cet effet avantageusement transparentes et les évidements centraux des platines 1, 2 et des porte-coquilles 6, 27 permettent une large accessibilité aux rayons, pour garantir une polymérisation efficace.

Par ailleurs, le dispositif de moulage est prévu pour accompagner le retrait de la matière durant la polymérisation. En effet, la matière occupant moins de volume au fur et à mesure de sa polymérisation, elle exerce une force d'attraction sur les surfaces de moulage des coquilles 12, 29.

Le premier porte-coquille 6 étant simplement posé par gravité sur la tête 15 de la vis 13 (ou sur la tige du vérin 19), cette force d'attraction est mise à profit pour soulever le premier porte-coquille 6 de sorte que la première coquille 12 et la deuxième coquille 29 restent plaquées à la matière pendant le retrait, et éviter ainsi un décollement entre les coquilles et la matière.

Les vérins 24 de la figure 8 peuvent de plus agir en tant que vérins de compensation pour faciliter le rapprochement des coquilles. Les chambres à grande section de ces vérins 24 sont alors mises en pression pour que les vérins 24 exercent sur le premier porte-coquille 6 une force verticale dirigée vers le haut et d'une intensité légèrement inférieure au poids du premier porte-coquille 6, tandis que les chambres à petite section sont reliées à un retour qui est à la pression athmosphérique.

Suite à la polymérisation, un bloc rigide est formé par les coquilles 12, 29 et la matière solidifiée.

Les mors concentriques 28 sont ensuite desserrés et la deuxième platine 2 est pivotée vers sa position initiale tandis que le premier porte-coquille 6 est ramené et bloqué contre la première platine 1.

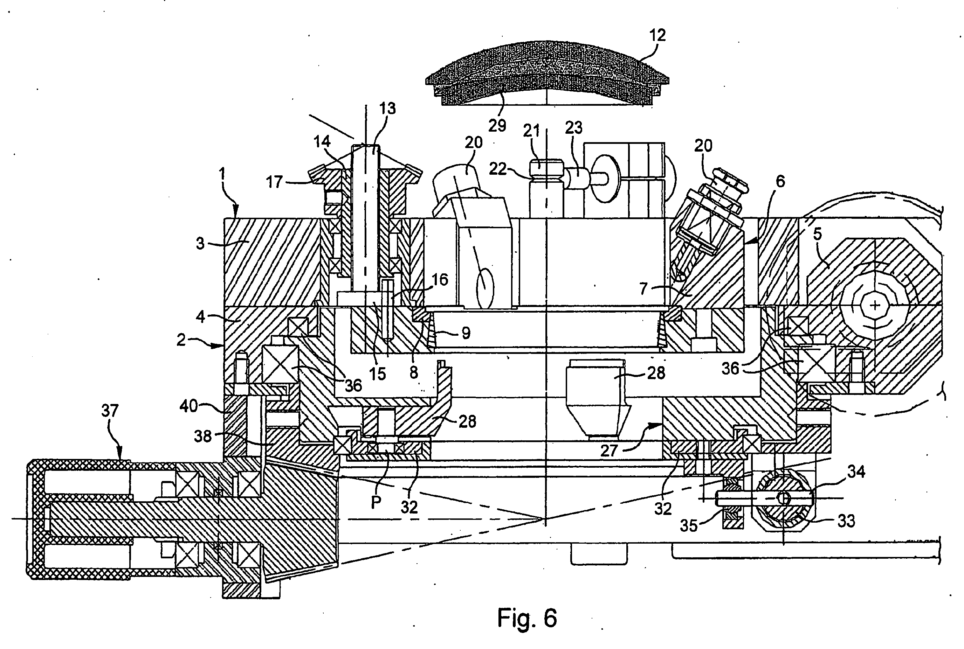

La première platine 1 est alors également pivotée vers sa position initiale, telle que montrée à la figure 6, et le bloc formé des coquilles 12, 29 et de la matière solidifiée est ensuite évacué par le haut, éventuellement par les mêmes moyens de préhension que pour la mise en position des coquilles 12, 29, et après le retrait des vérins de serrage 20.

Dans la variante comportant le vérin asservi 19 et les vérins 24, il est possible d'effectuer en parallèle, après desserrage des mors 28, l'opération consistant à ramener et bloquer le porte-coquille 6 contre la première platine 1 et l'opération consistant à pivoter cette première platine 1 vers sa position initiale.

La lentille ophtalmique ainsi moulée et polymérisée pourra suivre d'autres traitements consécutifs où elle sera démoulée et préparée pour être montée sur un support tel qu'une monture de lunettes.

La figure 7 montre une variante de l'étape de dépôt de la matière polymérisable dans la cuvette formée par la première coquille 12 et le premier porte-coquille 6. Une buse 39 de dépôt de matière est schématiquement représentée et, à la différence de l'étape décrite précédemment, la première platine 1 est inclinée.

La buse 39 commence par déposer un filet de matière sur un bord de la première coquille 12 et, au fur et à mesure du remplissage de la cuvette, la première platine 1 revient à sa position horizontale, jusqu'à obtenir le résultat de la figure 3.

Cette variante permet de minimiser les défauts provoqués par l'impact de la matière contre la première coquille 12 lors du versement.

Par ailleurs, au lieu de revenir à la position horizontale de la figure 3 au fur et à mesure du remplissage, la première platine 1 peut également rester inclinée pour les étapes suivantes. La deuxième platine 2 viendra alors se superposer à la première platine 1 de sorte à être elle-même inclinée, ce qui permet à la deuxième coquille 29, lors de l'étape de rapprochement entre la première coquille 12 et la deuxième coquille 29, d'entrer en contact avec la matière en commençant par un bord plutôt que par le centre.

Des variantes de réalisation du dispositif peuvent être envisagées sans pour autant sortir du cadre de l'invention. De même, le moulage d'autres types de lentilles optiques peut être envisagé, par exemple des lentilles de jumelles ou analogues.

## Revendications

1. Procédé de moulage d'une lentille optique, en particulier une lentille ophtalmique, à partir d'une matière polymérisable, comportant l'utilisation d'une première coquille de moulage (12) et d'une deuxième coquille de moulage (29) et le maintien desdites première et deuxième coquilles (12, 29) de moulage dans une position prédéterminée de moulage où elles sont disposées à plat à distance en regard l'une de l'autre ; comportant les étapes suivantes :
- immobiliser la première coquille (12) dans un premier porte-coquille (6) ;
- immobiliser la deuxième coquille (29) dans un deuxième porte-coquille (27) ;
- maintenir le premier porte-coquille (6) dans une orientation où une surface utile de moulage de la première coquille (12) regarde vers le haut ; et
- amener ledit premier porte-coquille (6) et ledit deuxième porte-coquille (27) à prendre une position relative prédéterminée où la première coquille (12) et la deuxième coquille (29) sont dans ladite position prédéterminée de moulage ;
procédé **caractérisé :**
- **en ce que** le premier porte-coquille (6) et la première coquille (12) sont sélectionnés pour que, dans ladite étape de maintenir, la surface utile de moulage de la première coquille (12) forme le fond d'une cuvette tandis que ladite étape d'amener comporte l'étape de disposer la deuxième coquille (29) au moins partiellement dans la cuvette, à distance de ses bords ;
- **en ce qu'**il comporte l'étape de déposer dans ladite cuvette une quantité prédéterminée de ladite matière polymérisable ; et
- **en ce que** ladite étape d'amener est réalisée après ladite étape de déposer et est telle que dans la position de moulage, une surface utile de moulage de la deuxième coquille (29) est en contact avec la matière polymérisable, en regard de la surface utile de moulage de la première coquille (12).

2. Procédé selon la revendication 1, **caractérisé en ce que** l'immobilisation est rigidement réalisée lors de l'étape d'immobiliser la première coquille (12) ainsi que lors de l'étape d'immobiliser la deuxième coquille (29), et **en ce que** le procédé comporte en outre, après l'étape d'amener ledit premier porte-coquille (6) et ledit deuxième porte-coquille (27) à prendre une position relative prédéterminée, l'étape d'immobiliser le premier porte-coquille (6) et le deuxième porte-coquille (27) l'un par rapport à l'autre à l'exception d'un mouvement mutuel de rapprochement.

3. Dispositif pour l'obtention d'une lentille optique, en particulier une lentille ophtalmique, à partir d'une matière polymérisable, ce dispositif comportant une première coquille de moulage (12), une deuxième coquille de moulage (29) et des moyens de maintien desdites première (12) et deuxième coquilles (29) de moulage dans une position prédéterminée de moulage où elles sont disposées à plat à distance en regard l'une de l'autre, lesdits moyens de maintien comportant :
- un premier porte-coquille (6) adapté à immobiliser la première coquille (12) dans une position prédéterminée par rapport audit premier porte-coquille (6), et adapté à prendre une position de travail dans laquelle une surface utile de moulage de la première coquille (12) regarde vers le haut ;
- un deuxième porte-coquille (27) adapté à immobiliser ladite deuxième coquille (29) dans une position prédéterminée par rapport audit deuxième porte-coquille (27), et adapté à prendre une position de travail dans laquelle une surface utile de moulage de la deuxième coquille (29) regarde vers le bas ; et
- une structure (1, 2) adaptée à amener ledit premier porte-coquille (6) et ledit deuxième porte-coquille (27) chacun dans une dite position de travail respective où la première coquille (12) et la deuxième coquille (29) sont dans ladite position prédéterminée de moulage ;
dispositif **caractérisé en ce que**, pour convenir à la mise en oeuvre du procédé selon l'une des revendications 1 et 2, la première coquille (12) et le premier porte-coquille (6) sont adaptés à coopérer pour que, dans ladite position de travail, ladite surface utile de moulage forme le fond d'une cuvette ayant des bords délimités par une portion de bord sensiblement cylindrique ; tandis que la première coquille (12), la deuxième coquille (29), le premier porte-coquille (6) et le deuxième porte-coquille (27) sont adaptés à coopérer pour que, lorsque le premier porte-coquille (6) et le deuxième porte-coquille (27) sont chacun dans une dite position de travail, ladite surface utile de la deuxième coquille (29) est en regard de la surface utile de la première coquille (12), en étant au moins partiellement disposée dans ladite cuvette, à distance de ses bords.

4. Dispositif selon la revendication 3, **caractérisé en ce que** le premier porte-coquille (6) est adapté à immobiliser rigidement la première coquille (12) et le deuxième porte-coquille (27) est adapté à immobiliser rigidement la deuxième coquille (29), et **en ce que** ladite structure (1, 2) est en outre adaptée à immobiliser le premier porte-coquille (6) et le deuxième porte-coquille (27) l'un par rapport à l'autre, à l'exception d'un mouvement mutuel de rapprochement.

5. Dispositif selon la revendication 3 ou 4, **caractérisé en ce que** l'encombrement latéral de la surface utile de moulage de la deuxième coquille (29) est inférieur à la largeur de la cuvette de sorte à former, dans ladite position prédéterminée de moulage, une nourrice de matière dans l'espace ouvert entre la deuxième coquille (29) et les bords de ladite cuvette.

6. Dispositif selon l'une des revendications 3 à 5, **caractérisé en ce qu'**il comporte un joint annulaire (9) adapté à coopérer avec la première coquille (12) de sorte que, lorsque celle-ci est dans sa position prédéterminée par rapport au premier porte-coquille (6), une extrémité dudit joint (9) est comprimée contre le contour de la surface utile de moulage pour assurer l'étanchéité entre le joint (9) et la première coquille (12), ledit joint (9) délimitant les bords de la cuvette.

7. Dispositif selon l'une des revendications 3 à 5, **caractérisé en ce que** la première coquille (12) comporte ladite portion de bord sensiblement cylindrique, laquelle, lorsque les coquilles (12, 29) sont dans leur position prédéterminée par rapport au porte-coquille (6 ; 27) respectif, saille sensiblement verticalement du contour de la surface utile de moulage en direction du deuxième porte-coquille (27).

8. Dispositif selon l'une des revendications 3 à 7, **caractérisé en que** l'un des porte-coquille (6 ; 27) au moins est relié à ladite structure (1, 2) par des moyens de guidage à coulissement.

9. Dispositif selon l'une des revendications 3 à 8, **caractérisé en ce que** le deuxième porte-coquille (27) comporte des moyens de serrage (28) de la deuxième coquille (29) définissant une position prédéterminée de réception de la deuxième coquille (29), ces moyens de serrage (28) présentant, lorsqu'ils sont associés à la deuxième coquille (29), un encombrement latéral inférieur à la largeur de la cuvette de sorte que la deuxième coquille (29) en prise sur ces moyens de serrage (28) peut être disposée à l'intérieur de la cuvette.

10. Dispositif selon l'une des revendications 3 à 9, **caractérisé en ce que** ladite structure comporte une première platine (1) reliée au premier porte-coquille (6) ainsi qu'une deuxième platine (2) reliée au deuxième porte-coquille (27), lesdites platines (1, 2) étant adaptées à être superposées de sorte que, dans cette position superposée, le premier porte-coquille (6) soit en vis-à-vis du deuxième porte-coquille (27).

11. Dispositif selon la revendication 10, **caractérisé en ce que** le premier porte-coquille (6) est mobile à coulissement par rapport à la première platine (1).

12. Dispositif selon la revendication 11, **caractérisé en ce qu'**il comporte en outre des moyens d'entraînement (13, 14, 17) du premier porte-coquille (6) par rapport à la première platine (1), ces moyens étant de plus adaptés à maintenir le premier porte-coquille (6) dans une position prédéterminée par rapport à la première platine (1).

13. Dispositif selon la revendication 11 ou 12, **caractérisé en ce qu'**il comporte en outre au moins un vérin de compensation (24) adapté à exercer sur l'ensemble formé par le premier porte-coquille (6) et la première coquille (12) une force opposée et juste inférieure au poids dudit ensemble.

14. Dispositif selon l'une des revendications 10 à 13, **caractérisé en ce que** le deuxième porte-coquille (27) est mobile en rotation par rapport à la deuxième platine (2).

15. Dispositif selon la revendication 14, **caractérisé en ce qu'**il comporte un index angulaire adapté à indiquer la position angulaire de la deuxième coquille (29) par rapport à la deuxième platine (2).

16. Dispositif selon l'une des revendications 10 à 15, **caractérisé en ce que** ladite structure comporte des moyens d'inclinaison permettant au premier porte-coquille (6) d'admettre, en plus de la position de travail, une position inclinée dans laquelle la première coquille (12) est orientée obliquement par rapport à sa position à plat.

17. Dispositif selon l'une des revendications 3 à 16, **caractérisé en ce que** le premier porte-coquille (6) comporte un siège annulaire rigide (8) adapté à recevoir la première coquille (12) et définissant ladite position prédéterminée de la première coquille (12) par rapport au premier porte-coquille (6).

18. Dispositif selon la revendication 17, **caractérisé en ce qu'**il comporte au moins un vérin de verrouillage (20) adapté à solliciter la première coquille (12) contre ledit siège annulaire (8).

## Claims

1. Method of moulding an optical lens, especially an ophthalmic lens, from a polymerisable material, which method uses a first moulding shell (12) and a second moulding shell (29) and holds said first and second moulding shells (12, 29) in a predetermined moulding position in which they are laid flat and facing each other at a distance; the method includes the following steps:
- immobilising the first shell (12) in a first shell support (6);
- immobilising the second shell (29) in a second shell support (27);
- maintaining the first shell support (6) in an orientation in which an active moulding surface of the first shell (12) faces upward; and
- bringing said first shell support (6) and said second shell support (27) to a predetermined relative position in which the first shell (12) and the second shell (29) are in said predetermined moulding position;
the method being **characterised:**
- **in that** the first shell support (6) and the first shell (12) are selected so that, during said maintaining step, the active moulding surface of the first shell (12) forms the bottom of a cup while said bringing step includes a step of placing the second shell (29) at least partially in the cup, at a distance from its edges;
- **in that** it includes a step of depositing a predetermined quantity of said polymerisable material in said cup; and
- **in that** said bringing step is carried out after said depositing step and is such that, in the moulding position, an active moulding surface of the second shell (29) is in contact with the polymerisable material, facing the active moulding surface of the first shell (12).

2. Method according to claim 1, **characterised in that** immobilising is effected rigidly during the step of immobilising the first shell (12) and during the step of immobilising the second shell (29) and **in that** the method further includes, after the step of bringing said first shell support (6) and said second shell support (27) to a predetermined relative position, a step of immobilising the first shell support (6) and the second shell support (27) relative to each other except for mutual closing movement.

3. Device for obtaining an optical lens, especially an ophthalmic lens, from a polymerisable material, the device comprising a first moulding shell (12), a second moulding shell (29) and means for maintaining said first moulding shell (12) and said second moulding shell (29) in a predetermined moulding position in which they are disposed flat and facing each other at a distance, said maintaining means comprising:
- a first shell support (6) adapted to immobilise the first shell (12) in a predetermined position relative to said first shell support (6) and to assume a working position in which an active moulding surface of the first shell (12) faces upward;
- a second shell support (27) adapted to immobilise said second shell (29) in a predetermined position relative to said second shell support (27) and to assume a working position in which an active moulding surface of the second shell (29) faces downward;
- a structure (1, 2) adapted to bring said first shell support (6) and said second shell support (27) into respective working positions in which the first shell (12) and the second shell (29) are in said predetermined moulding position;
the device being **characterized in that**, in order to suit the implementation of the method according to claim 1 or claim 2, the first shell (12) and the first shell support (6) are adapted to cooperate so that, in said working position, said active moulding surface forms the bottom of a cup having edges delimited by a substantially cylindrical edge portion, while the first shell (12), the second shell (29), the first shell support (6) and the second shell support (27) are adapted to cooperate so that, when the first shell support (6) and the second shell support (27) are each in the working position, said active surface of the second shell (29) faces the active surface of the first shell (12), being at least partially placed in said cup, at a distance from its edges.

4. Device according to claim 3, **characterised in that** the first shell support (6) is adapted to immobilise rigidly the first shell (12) and the second shell support (27) is adapted to immobilise rigidly the second shell (29) and **in that** said structure (1, 2) is further adapted to immobilise the first shell support (6) and the second shell support (27) relative to each other except for mutual closing movement.

5. Device according to claim 3 or claim 4, **characterised in that** the overall lateral size of the active moulding surface of the second shell (29) is less than the width of the cup so as to form, in said predetermined moulding position, a supply reserve of material in the open space between the second shell (29) and the edges of said cup.

6. Device according to any one of claims 3 to 5, **characterised in that** it includes an annular seal (9) adapted to cooperate with the first shell (12) so that, when the latter is in its predetermined position relative to the first shell support (6), one end of said seal (9) is compressed against the contour of the active moulding surface to provide fluid-tightness between the seal (9) and the first shell (12), said seal (9) delimiting the edges of the cup.

7. Device according to any one of claims 3 to 5, **characterised in that** the first shell (12) includes said substantially cylindrical edge portion which, when the shells (12, 29) are in their predetermined position relative to the respective shell support (6; 27), projects substantially vertically from the contour of the active moulding surface in the direction of the second shell support (27).

8. Device according to any one of claims 3 to 7, **characterised in that** at least one of the shell supports (6; 27) is connected to said structure (1, 2) by sliding guiding means.

9. Device according to any one of claims 3 to 8, **characterised in that** the second shell support (27) includes means (28) for clamping the second shell (29) defining a predetermined position for reception of the second shell (29), said clamping means (28) having, when they are associated with the second shell (29), an overall lateral size less than the width of the cup so that the second shell (29) gripped by the clamping means (28) may be placed in the cup.

10. Device according to any one of claims 3 to 9, **characterised in that** said structure includes a first plate (1) connected to the first shell support (6) and a second plate (2) connected to the second shell support (27), said plates (1, 2) being adapted to be superposed so that, in this superposed position, the first shell support (6) faces the second shell support (27).

11. Device according to claim 10, **characterised in that** the first shell support (6) is slidably mobile relative to the first plate (1).

12. Device according to claim 11, **characterised in that** it further includes means (13, 14, 17) for driving the first shell support (6) relative to the first plate (1) and for maintaining the first shell support (6) in a predetermined position relative to the first plate (1).

13. Device according to claim 11 or claim 12, **characterised in that** it further includes at least one compensation cylinder (24) adapted to exert on the combination formed by the first shell support (6) and the first shell (12) a force opposite to and slightly less than the weight of said combination.

14. Device according to any one of claims 10 to 13, **characterised in that** the second shell support (27) is rotatably mobile relative to the second plate (2).

15. Device according to claim 14, **characterised in that** it includes an angular index adapted to indicate the angular position of the second shell (29) relative to the second plate (2).

16. Device according to any one of claims 10 to 15, **characterised in that** said structure includes inclination means enabling the first shell support (6) to assume, in addition to the working position, an inclined position in which the first shell (12) is oriented obliquely to its flat position.

17. Device according to any one of claims 3 to 16, **characterised in that** the first shell support (6) includes a rigid annular seat (8) adapted to receive the first shell (12) and defining said predetermined position of the first shell (12) relative to the first shell support (6).

18. Device according to claim 17, **characterised in that** it includes a locking cylinder (20) adapted to urge the first shell (12) against said annular seat (8).

## Patentansprüche

1. Verfahren zum Gießen einer optischen Linse, insbesondere einer ophthalmischen Linse, ausgehend von einem polymerisierbaren Material, umfassend die Verwendung einer ersten Gußkokille (12) und einer zweiten Gußkokille (29), sowie das Halten der ersten und zweiten Gußkokillen (12, 29) in einer vorbestimmten Gußposition, in welcher sie plan unter Abstand gegenüberstehend einander angeordnet sind; umfassend die nachfolgenden Schritte:
- Immobilisieren der ersten Kokille (12) in einem Kokillenträger (6);
- Immobilisieren der zweiten Kokille (29) in einem zweiten Kokillenträger (27);
- Halten des ersten Kokillenträgers (6) in einer Ausrichtung, in der eine nutzbare Gußfläche der ersten Kokille (12) nach oben gerichtet ist; und
- Bewirken, dass der ersten Kokillenträger (6) und der zweite Kokillenträger (27) eine vorbestimmte Relativposition einnehmen, in welcher die erste Kokille (12) und die zweite Kokille (29) in der vorbestimmten Gußposition sind; wobei das Verfahren **dadurch gekennzeichnet ist, dass**
- der ersten Kokillenträger (6) und die erste Kokille (12) ausgewählt sind, derart, dass in dem Schritt des Haltens die nutzbare Gußfläche der ersten Kokille (12) den Boden einer Schale bildet, wohingegen der Schritt des Bewirkens den Schritt des Anordnens der zweiten Kokille (29) zumindest teilweise in der Schale unter Abstand der Ränder davon umfasst;
- ein Schritt enthalten ist, des Anordnens einer vorbestimmten Menge des polymerisierbaren Materials in der Schale; und
- dass der Schritt des Bewirkens durchgeführt wird nach dem Schritt des Anordnens und derart ist, dass in einer Gußposition eine nutzbare Gußfläche der zweiten Kokille (29) in Berührung steht mit dem polymerisierbaren Material gegenüberstehend der nutzbaren Gußfläche der ersten Kokille (12).

2. Verfahren nach Anspruch 1, **dadurch gekennzeichnet, dass** die Immobilisation starr ausgeführt ist während dem Schritt des Immobilisierens der ersten Kokille (12) sowie während dem Schritt des Immobilisierens der zweiten Kokille (29), und **dadurch**, dass das Verfahren ferner umfasst, nach dem Schritt des Bewirkens, dass der ersten Kokillenträger (6) und der zweite Kokillenträger (27) eine vorbestimmte Relativposition einnehmen den Schritt des Immobilisierens des ersten Kokillenträgers (6) und des zweiten Kokillenträgers (27) in Bezug zueinander unter Ausnahme einer wechselseitigen Annäherungsbewegung.

3. Vorrichtung zur Ausbildung einer optischen Linse, insbesondere einer ophthalmischen Linse, ausgehend von einem polymerisierbaren Material, wobei die Vorrichtung umfasst, eine erste Gußkokille (12), eine zweite Gußkokille (29) sowie Halteeinrichtungen der ersten (12) und zweiten (29) Gußkokille in einer vorbestimmten Gußposition, in der sie plan unter Abstand gegenüberstehend mit Bezug zueinander angeordnet sind, wobei die Halteeinrichtungen umfassen:
- einen ersten Kokillenträger (6), ausgelegt zur Immobilisierung der ersten Kokille (12) in einer vorbestimmten Position mit Bezug auf dem ersten Kokillenträger (6) und ausgelegt zum einnehmen einer Arbeitsposition in welcher eine nutzbare Gußfläche der ersten Kokille (12) nach oben gerichtet ist;
- einen zweiten Kokillenträger (27), ausgelegt zum Immobilisieren der zweiten Kokille (29) in einer vorbestimmten Position mit Bezug auf den zweiten Kokillenträger (27), und ausgelegt um eine Arbeitsposition einzunehmen, in welche eine nutzbare Gußfläche der zweiten Kokille (29) nach unten gerichtet ist; und
- eine Struktur (1, 2), ausgelegt zum Bewirken der Anordnung des ersten Kokillenträgers (6) und des zweiten Kokillenträgers (27), jeweils in einer jeweiligen Arbeitsposition, in welcher die erste Kokille (12) und die zweite Kokille (29) in der vorbestimmten Gußposition sind;
wobei die Vorrichtung **dadurch gekennzeichnet ist, dass**, um geeignet zu sein zur Ausführung eines Verfahrens nach einem der Ansprüche 1 und 2, die ersten Kokille (12) und der ersten Kokillenträger (6) ausgelegt sind zum Wechselwirken, derart, dass in der Arbeitsposition die nutzbare Gußfläche den Boden einer Schale bildet, die Ränder aufweist, begrenzt durch eine im Wesentlichen zylindrischen Randabschnitts; wohingegen die erste Kokille (12), die zweite Kokille (29), der ersten Kokillenträger (6) und der zweite Kokillenträger (27) ausgelegt sind, um wechselzuwirken, derart, dass wenn der erste Kokillenträger (6) und der zweite Kokillenträger (27) jeweils in einer Arbeitsposition sind, die nutzbare der Fläche der zweiten Kokille (29) gegenüberstehend der nutzbaren Fläche der ersten Kokille (12) ist und zumindest teilweise angeordnet ist in der Schale, und zwar unter Abstand der Ränder davon.

4. Vorrichtung nach Anspruch 3, **dadurch gekennzeichnet, dass** der ersten Kokillenträger (6) ausgelegt ist zum starren Immobilisieren der ersten Kokille (12) und dass der zweite Kokillenträger (27) ausgelegt ist zum starren Immobilisieren der zweiten Kokille (29) und dass die Struktur (1, 2) ferner ausgelegt ist zum Immobilisieren des ersten Kokillenträgers (6) und des zweiten Kokillenträgers (27) mit Bezug zueinander mit Ausnahmen einer wechselseitigen Annäherungsbewegung.

5. Vorrichtung nach Anspruch 3 oder 4, **dadurch gekennzeichnet, dass** das laterale Ausmaß der nutzbaren Gußfläche der zweiten Kokille (29) geringer ist als die Breite der Schale so dass in der vorbestimmten Gußposition eine Materialspeisung in den offenen Raum zwischen der zweiten Kokille (29) und den Rändern der Schale gebildet wird.

6. Vorrichtung nach einem der Ansprüche 3 bis 5, **dadurch gekennzeichnet, dass** sie eine ringförmige Dichtung (9) umfasst, ausgelegt zur Wechselwirkung mit der ersten Kokille (12), derart, dass wenn diese in der vorbestimmten Position vorliegt mit Bezug auf den ersten Kokillenträger (6) ein Ende der Dichtung (9) komprimiert vorliegt gegen die Kontur der nutzbaren Gußfläche, um Dichtheit zu gewährleisten zwischen der Dichtung (9) und der ersten Kokille (12), wobei die Dichtung (9) die Ränder der Schale begrenzt.

7. Vorrichtung nach einem der Ansprüche 3 bis 5, **dadurch gekennzeichnet, dass** die erste Kokille (12) den im wesentlichen zylindrischen Randabschnitt umfasst, welcher wenn die Kokillen (12, 29) in ihrer vorbestimmten Position vorliegen mit Bezug auf den jeweiligen Kokillenträger (6; 27) im Wesentlichen vertikal vorspringt von der Kontur der nutzbaren Gußfläche in Richtung des zweiten Kokillenträgers (27).

8. Vorrichtung nach einem der Ansprüche 3 bis 7, **dadurch gekennzeichnet, dass** zumindest einer der Kokillenträger (6; 27) mit der Struktur (1, 2) verbunden ist über Gleitführungseinrichtungen.

9. Vorrichtung nach einem der Ansprüche 3 bis 8, **dadurch gekennzeichnet, dass** der zweite Kokillenträger (27) Spanneinrichtungen (28) der zweiten Kokille (29) umfasst, definieren eine vorbestimmte Aufnahmeposition der zweiten Kokille (29), wobei die Spanneinrichtungen (28) wenn sie der zweiten Kokille (29) zugeordnet sind ein Lateralausmaß aufweisen, geringer als die Breite der Schale, so dass die zweite Kokille (29), in Eingriff bezüglich der Spanneinrichtungen (28) im Inneren der Schale angeordnet werden kann.

10. Vorrichtung nach einem der Ansprüche 3 bis 9, **dadurch gekennzeichnet, dass** die Struktur eine erste Platine (1) umfasst, verbunden mit dem ersten Kokillenträger (6) sowie eine zweite Platine (2), verbunden mit dem zweiten Kokillenträger (27), wobei die Platinen (1, 2) ausgelegt sind derart überlagert zu werden, dass in dieser überlagerten Position der erste Kokillenträger (6) gegenüberstehend sei zu dem zweiten Kokillenträger (27).

11. Vorrichtung nach Anspruch 10, **dadurch gekennzeichnet, dass** der erste Kokillenträger (6) gleitend bewegbar ist mit Bezug auf die erste Platine (1).

12. Vorrichtung nach Anspruch 11, **dadurch gekennzeichnet, dass** sie ferner Antriebseinrichtung (13, 14, 17) des ersten Kokillenträgers (6) mit Bezug auf die erste Platine (1) umfasst, wobei diese Einrichtungen ferner ausgelegt sind zum Halten des ersten Kokillenträgers (6) in einer vorbestimmten Position mit Bezug auf die erste Platine (1).

13. Vorrichtung nach Anspruch 11 oder 12, **dadurch gekennzeichnet, dass** sie ferner zumindest einen Kompensationsnonius (24) umfasst, ausgelegt, um an der Gesamtheit, gebildet aus dem ersten Kokillenträger (6) und der ersten Kokille (12) eine entgegengesetzten Kraft, just geringer zu dem Gewicht der Gesamtheit auszuüben.

14. Vorrichtung nach einem der Ansprüche 10 bis 13 **dadurch gekennzeichnet, dass** der zweite Kokillenträger (27) drehbar beweglich ist mit Bezug auf die zweite Platine (2).

15. Vorrichtung nach Anspruch 14, **dadurch gekennzeichnet, dass** sie einen winkelmäßigen Index umfasst, ausgelegt zum Anzeigen einer winkelmäßigen Position der zweiten Kokille (29) mit Bezug auf die zweite Platine (2).

16. Vorrichtung nach einem der Ansprüche 10 bis 15, **dadurch gekennzeichnet, dass** sie Strukturneigungseinrichtungen umfasst, erlaubend dem ersten Kokillenträger (6) zusätzlich zu der Arbeitsposition eine geneigte Position einzunehmen, in welcher die erste Kokille (12) schräg ausgerichtet ist mit Bezug auf die plane Position davon.

17. Vorrichtung nach einem der Ansprüche 3 bis 16, **dadurch gekennzeichnet, dass** der ersten Kokillenträger (6) einen starren ringförmigen Sitz (8) umfasst, ausgelegt zum Aufnehmen der ersten Kokille (12) und definierend die vorbestimmte Position der ersten Kokille (12) mit Bezug auf den ersten Kokillenträger (6).

18. Vorrichtung nach Anspruch 17, **dadurch gekennzeichnet, dass** sie zumindest einen Verriegelungsnonius (20) umfasst, ausgelegt zum Beaufschlagen der ersten Kokille (12) gegen den ringförmigen Sitz (8).
